# EUROPEAN PATENT SPECIFICATION

(11) **EP 3 851 775 B1**
(45) Date of publication and mention of the grant of the patent: **27.09.2023**
(21) Application number: 20152424.6
(22) Date of filing: 17.01.2020
(51) Int. Cl.: F25D 21/08, F25B 47/02, F25D 17/06, F25D 21/00

(54) **METHOD OF DEFROSTING A FREEZER CABINET**
VERFAHREN ZUM ABTAUEN EINES GEFRIERSCHRANKS
PROCÉDÉ DE DÉGIVRAGE D'UNE ARMOIRE DE CONGÉLATEUR

(43) Date of publication of application: 21.07.2021
(73) Proprietor: Carrier Corporation, Palm Beach Gardens, FL 33418 (US)
(72) Inventor: PANZER, Michael, 60385 Frankfurt (DE); FREIBAUER, Mathias, 65719 Hofheim am Taunus (DE)
(74) Representative: Dehns

(56) References cited:
- JP-A- H05 126 458
- US-A- 4 369 632
- US-A1- 2003 163 999
- US-A1- 2011 036 105
- US-A1- 2017 191 733

## Description

The present invention relates to a method of controlling a defrost process in a freezer cabinet, and a corresponding freezer cabinet.

When the door of a freezer cabinet is opened, air and water vapour are able to enter the freezer cabinet. When the water vapour comes into contact with the cold air within the freezer cabinet, it condenses and causes ice to be deposited within the freezer cabinet. The water vapour can also reach the cooling elements that are used to cool the air within the freezer cabinet, which can result in a build-up of ice forming on the cooling elements.

The formation of ice within freezer cabinets poses several issues. It can inhibit the efficient transfer of heat out of the cabinet, especially if large amounts of ice are allowed to build-up on the cooling elements, and can also reduce the space available within the cabinet for storing goods. Hence, ice formation and build-up within freezer cabinets can lead to lower efficiency, increased energy consumption and increased running costs.

These issues can be exacerbated by regular and repeated opening and closing of freezer cabinet doors, for example by shoppers taking goods from within a freezer cabinet in a supermarket, which allows larger quantities of water vapour to enter the cabinet.

Therefore, in order to counteract these issues, it is known to provide freezer cabinets with a defrost mode of operation during which the air within the cabinet is heated in order to melt the ice that has formed within the cabinet. These defrost modes are often intended to be run periodically, either at regular intervals or if a large amount of ice is detected within the cabinet, in order to melt the ice within the freezer cabinet and improve the cooling efficiency of the cabinet.

US 2003/163999 discloses a system for controlling a defrost cycle in a multicompartment refrigerator, having an adaptive defrost timer control module that is arranged to learn the optimum defrost cycle for the refrigerator based on previous defrost operations, and operate the defrost cycle accordingly. This document discloses the preamble of appended claim 1.

US 2017/191733 teaches a method for controlling a defrost cycle of a refrigerator, wherein a defrost mode is initiated when a temperature adjacent to the evaporator and the evaporator fan is sensed to be below freezing for a predetermined length of time, and terminated once the sensed temperature has been above a threshold temperature for a predefined amount of time.

US 2011/036105 discloses a method for controlling a defrost mode of a refrigerator in which the compressor and evaporator fan are first turned off before the fan is turned on for a period of time in order to pass relatively warm air over the evaporator. After this, the fan is turned off and a heater is turned on for a predetermined period of time and/or until a predetermined temperature is reached.

US 4 369 632 A discloses a refrigerated display system according to the preamble of appended claim 11 using ambient air circulated over the evaporator during defrosting.

JP H05 126458 A discloses a cabinet with an evaporator and a fan, the fan being kept on while defrosting the evaporator until an inside temperature sensor of the storage chamber has increased up to a threshold.

In a first aspect according to appended claim 1, the present invention provides a method of controlling a defrost process in a freezer cabinet having an evaporator heat exchanger for cooling air within the freezer cabinet and an evaporator fan for drawing air across the evaporator heat exchanger, wherein the evaporator heat exchanger is a part of a refrigeration circuit for cooling the freezer cabinet; the method comprising: switching the refrigeration circuit from a cooling mode to a defrost mode to warm the air within the freezer cabinet; and whilst in the defrost mode: measuring the temperature of the air at a first location within the freezer cabinet remote from the evaporator heat exchanger; switching the evaporator fan on to draw air over the evaporator heat exchanger if the measured temperature of the air exceeds a first switching temperature; and switching the evaporator fan off if the temperature of the air falls below a second switching temperature lower than the first switching temperature.

In the defrost mode the evaporator fan is switched on, i.e. activated, when the measured temperature of the air exceeds the first switching temperature and is switched off, i.e. deactivated, when the measured temperature of the air falls below the second switching temperature. That is to say, the evaporator fan is only operated in the defrost mode when the measured temperature during defrost is between the first and second switching temperatures. The evaporator fan may be cycled on and off multiple times during the defrost mode, as the temperature varies between the first and second switching temperatures. For example, the method may use two or more on-off cycles. The defrost mode will typically involve deactivation of the refrigeration circuit, and thus switching from the cooling mode to the defrost mode may comprise ceasing circulation of refrigerant fluid, such as by deactivation of a compression device of the refrigeration circuit.

The evaporator fan may have the primary purpose of creating circulation of air through a storage compartment of the freezer cabinet as well as drawing compartment air over the evaporator in order to thereby cool the storage compartment during the cooling mode. Thus, the evaporator fan may be a fan that is operated in the cooling mode to provide cooled air to the storage compartment. The evaporator fan may be the only fan provided within the freezer cabinet for drawing air over the evaporator. Thus, the freezer cabinet may include no further fans for drawing air over the evaporator, and in particular there may be no fans that are provided for the defrost mode without being used during the cooling mode.

Switching from the cooling mode to the defrost mode may comprise switching off the evaporator fan such that at the start of the defrost mode the evaporator fan is switched off until the measured temperature exceeds the first switching temperature. In this way, the air at the first location is allowed to warm more uniformly and to a higher temperature before being actively passed to one or more regions of the freezer cabinet where the warm air may result in ice removal, i.e. defrosting. That is to say, the air at the first location is allowed to increase to the first switching temperature before being passed to regions of the freezer cabinet for defrosting. If the evaporator fan were operated before the temperature of the air increased to the first switching temperature, the air passed to regions of the freezer cabinet for defrosting may not be sufficiently warm to melt the ice. Moreover, since the warmed air is only actively passed to these regions by action of the fan once the temperature of the air has risen to the first switching temperature, goods stored in these regions are not exposed to the warm air until the air has reached the first switching temperature. This increases the efficiency of the defrost process and results in a shorter defrost time, since it allows warmer air to be used during defrosting, and also reduces the overall heating experienced by goods within the freezer cabinet during the defrost process, which can reduce degradation of the goods.

When the fan is not operated to draw air over the evaporator heat exchanger, e.g. when the fan is switched off, the warm air may naturally flow, for example by natural convention, to regions of the freezer cabinet where it may begin to melt ice, which may cause the air to become moist and entrained with water vapour. The water vapour in the air can freeze and cause icy deposits within the freezer cabinet if the moist air is allowed to cool, for example if it comes into contact with an area of relatively cold air. When the evaporator fan is operated, e.g. switched on, the air is driven by the fan and the water vapour entrained within the air becomes more spread out and less densely concentrated than in the naturally flowing air. This means that any icy deposits precipitating from the air driven by the fan will be smaller and easier to subsequently remove. The operation of the fan hence may both aid defrosting of existing ice, whilst reducing the risk of new ice building up due to warm moist air from the defrosting process.

When the evaporator fan is switched on, the warmed air will flow through the freezer cabinet and this air will reduce in temperature as it melts ice and mixes with colder air. This causes a reduction in the temperature of the air measured at the first location. By switching off the fan when the temperature measured at the first location falls below the second switching temperature, it is possible to prevent the warm air from becoming too cold to efficiently melt ice within the freezer cabinet.

The refrigeration circuit may comprise a compressor for compressing a refrigerant and thus it may be a compression refrigeration circuit, as distinct from other forms of refrigeration such as absorption refrigerators. When operated, the compressor may act to pump refrigerant through the refrigeration circuit. As noted above, switching the refrigeration circuit from the cooling mode to the defrost mode may comprise switching off, i.e. deactivating, the compressor. Switching the refrigeration circuit from the defrost mode to the cooling mode may comprise switching on, i.e. activating, the compressor. When the compressor is switched off, the refrigerant will not be compressed or pumped through the refrigeration circuit by the compressor. Hence, switching the compressor off will stop heat absorption by the evaporator.

The refrigeration circuit may comprise a heat rejecting heat exchanger, such as a condenser heat exchanger for removing heat from a refrigerant and/or an expansion valve for expanding and reducing the pressure of a refrigerant. The refrigeration circuit may be arranged such that a refrigerant is able to flow through the compressor, the heat rejecting heat exchanger, the expansion valve and the evaporator heat exchanger in a closed loop. When refrigerant flows through the refrigeration circuit in this direction, the evaporator heat exchanger acts as a heat absorbing heat exchanger and can be used to cool air within the freezer cabinet.

When the refrigeration circuit is in the defrost mode, the air within the freezer cabinet may be warmed, at least in part, by the local environment surrounding the freezer cabinet. That is to say, a heat source for warming the air within the freezer cabinet may be provided by the environment surrounding the freezer cabinet. For example, the temperature of the air within the freezer may naturally increase towards the ambient temperature of the local environment in the absence of cooling by the evaporator heat exchanger.

During the defrost mode, the refrigeration circuit may be operated in a heating mode to heat the air within the freezer cabinet during the defrost mode. In the heating mode, the evaporator heat exchanger may be caused to heat the air within the freezer cabinet.

The refrigeration circuit may include a reversing valve for reversing a flow of refrigerant through the circuit when in the heating mode. That is to say, the reversing valve may enable the refrigerant to flow through the compressor, the evaporator heat exchanger, the expansion valve, and the condenser heat exchanger, in that order. In this way, hot compressed refrigerant from the compressor may be passed to the evaporator heat exchanger. This can allow the evaporator heat exchanger to be used to heat the air within the freezer cabinet. When the flow of refrigerant is reversed, the refrigeration circuit can be said to be in the heating mode. The reversing valve may be configured to be actuated, i.e. to cause the refrigeration system to operate in the heating mode in response to a supply of electrical current to the reversing valve. During the defrost mode, the air within the freezer cabinet may be warmed by operating the refrigerant circuit in the heating mode. That is to say, the air in the freezer cabinet may be warmed by using the reversing valve to reverse the flow of refrigerant within the refrigeration circuit.

Alternatively or additionally the freezer cabinet may comprise one or more heater(s) for heating air within the freezer cabinet. The heater(s) may be electric heater(s). The heater may be located adjacent the evaporator heat exchanger such that operation of the evaporator fan draws air over the heater in addition to the evaporator heat exchanger. During the defrost mode, the heater(s) may be used to warm air within the freezer cabinet.

Provision of the heater(s) and/or the reversing valve allows the air within the freezer cabinet to be actively warmed during the defrost mode. For instance, the air may be heated by the heater(s) and/or by operation of the refrigeration circuit in the heating mode. This allows the air to be heated more quickly. The heater(s) and/or the evaporator heat exchanger can be used to uniformly heat the air to a temperature for efficiently melting ice within the freezer cabinet.

As discussed above, when the evaporator fan is switched on in the defrost mode, the warmed air will flow through the freezer cabinet and reduce in temperature as it melts ice and mixes with colder air. As a result, the temperature of the air measured at the first location will reduce. When the temperature measured at the first location falls below the second switching temperature the fan is switched off to reduce the mixing of the warmed air with the cooler air. The heater and/or the evaporator heat exchanger can then be used to uniformly warm the air back to the first switching temperature.

Moreover, when the evaporator fan is operated it acts to draw the air over the heater(s) and/or the evaporator heat exchanger, thereby allowing the any water vapour in the air to be warmed as the air passes over the heater(s) and/or evaporator heat exchanger. This prevents cooling of the water vapour and minimises the risk of icy deposits forming within the freezer cabinet, such as ice or snow caused by cooling of the water vapour within the storage compartment.

The first switching temperature may be a temperature in the range between -5°C and 11 °C inclusive. For example, the first switching temperature may be -1 °C or 10°C. This ensures that the air is warmed sufficiently to melt ice within the freezer cabinet.

The second switching temperature may be a temperature in the range between - 10°C and 5°C inclusive. For example, the second switching temperature may be -6°C or - 1 °C. This ensures that the warm air within the freezer cabinet is not cooled to such an extent that it becomes ineffective at melting ice.

The location of the first location within the freezer cabinet where the temperature of the air is measured can have an effect on what temperatures should be set as the first and second switching temperatures. For example, if the first location is a sheltered location within the freezer cabinet the air temperature measured at the first location may vary more slowly during a defrost process compared to if the temperature were measured at a more exposed location, and vice versa. Similarly, the temperature measured at a sheltered location may vary more slowly than the temperature of the air in other regions of the freezer cabinet. Therefore, if the first location is a sheltered location, the first and second switching temperatures may be lower than if the first location were an exposed location. For example, if the first location is a sheltered location, the first and second switching temperatures may be -1°C and -6°C respectively, whereas if the first location is an exposed location, the first and second switching temperatures may be 10°C and 0°C respectively. In addition, or alternatively, if the first location is a sheltered location, the first and second switching temperatures may differ by a smaller degree than if the first location were an exposed location. For example, if the first location is a sheltered location, the first and second temperatures may differ by 7°C, whereas if the first location is an exposed location, the first and second switching temperatures may differ by 10°C. This can prevent overheating of the freezer cabinet during a defrost process which could potentially damaging goods stored therein.

The method may further include measuring a temperature of the air at a second location within the freezer cabinet. The second location may be adjacent to the evaporator heat exchanger and/or the heater(s). The defrost process may continue until the measured temperature of the air at the second location exceeds a defrost termination temperature. That is to say, the freezer cabinet may be switched from the defrost mode to the cooling mode when the temperature measured at the second location exceeds the defrost termination temperature. The defrost termination temperature may be a temperature in the range between 2°C and 25°C inclusive , and it can vary according to the type of freezer cabinet and the position of a sensor used for detecting the defrost termination temperature. For example, the defrost termination temperature may be about 3°C, about 10°C, or about 15°C. By stopping the defrost process when the temperature at the second location reaches the defrost termination temperature, it is possible to ensure that conditions do not become too warm for the goods within the freezer cabinet. Hence, it is possible to ensure that the goods do not reach such a temperature above which they may become damaged or degraded. This is of particular benefit in frozen food storage, where the food may become unsuitable for consumption and may have to be disposed of if it is subjected to an unacceptably high temperature.

The temperature of the air at the first location and/or the temperature of the air at the second location may be measured using one or more temperature sensors. For example, a temperature sensor may be positioned at the first location to measure the temperature of the air at the first location, and/or a temperature sensor may be positioned at the second location to measure the temperature of the air at the second location. The temperature sensor may be a thermal switch for providing direct mechanical control over an electrical circuit that provides power to the fan and/or the heating component. For example, the temperature sensor may be a bimetallic mechanical switch. Alternatively, the temperature sensor may be an electrical sensor. For example, the temperature sensor may be a thermistor sensor, semiconductor sensor and/or thermocouple. Where the temperature sensor is an electrical sensor, the freezer cabinet may comprise a digital controller for receiving signals from the electrical sensor and controlling operation of the fan and/or the heating component.

The freezer cabinet may comprise a storage compartment for containing goods in a temperature controlled environment. The storage compartment may define an internal volume in which goods can be stored. The storage compartment may have a first inlet for allowing air to flow into and out from a lower portion of the storage compartment. The storage compartment may comprise a second inlet for allowing air to flow into and out from an upper portion of the storage compartment. It will be appreciated that the direction of air flow through the inlet(s) may vary depending on activation of the evaporator fan and/or other factors, such as air flows resulting from temperature differentials. The inlet(s) allow for compartment air from the storage compartment to flow to and/or from the evaporator heat exchanger.

The first location may be the location of the first inlet. That is to say, measuring the temperature of the warmed air at the first location may comprise measuring the temperature of the warmed air at the first inlet. The first location may be downstream of the heating component in a first direction.

The evaporator heat exchanger and/or the heater may be located externally of the storage compartment. Hence, air warmed by the evaporator heat exchanger and/or heater may enter the storage compartment via the first and/or second inlet.

The evaporator fan may be arranged to direct air from the evaporator heat exchanger and/or the heater(s) into the storage compartment via the second inlet. That is to say, in operation i.e. when the evaporator fan is switched on, the fan may cause air from the evaporator heat exchanger and/or the heater(s) to flow into the upper portion of the storage compartment via the second inlet. The fan may be arranged to push air in a second direction, opposite to the first direction.

The freezer cabinet may be of the plugin type, semi plugin type or remote type. The freezer cabinet may be a part of a refrigerated display system. The refrigerated display system may include the freezer cabinet and the refrigeration circuit, which may comprise the compressor, the heat rejecting heat exchanger, the expansion valve, the evaporator heat exchanger and, where present, the reversing valve.

The refrigeration circuit may be contained wholly within the freezer cabinet, which may hence be of the plugin type. That is to say, the compressor, the heat rejecting heat exchanger, the expansion valve, the evaporator heat exchanger and/or the reversing valve may all be contained within the freezer cabinet. Accordingly, the present invention may be said to provide a method of controlling a defrost process in a freezer cabinet having a refrigeration circuit comprising an evaporator heat exchanger for cooling air within the freezer cabinet and an evaporator fan for drawing air across the evaporator heat exchanger, the method comprising: switching the refrigeration circuit from a cooling mode to a defrost mode to warm the air within the freezer cabinet; and whilst in the defrost mode: measuring the temperature of the air at a first location within the freezer cabinet remote from the evaporator heat exchanger; switching the evaporator fan on to draw air over the evaporator heat exchanger if the measured temperature of the air exceeds a first switching temperature; and switching the evaporator fan off if the temperature of the air falls below a second switching temperature lower than the first switching temperature.

Alternatively, the refrigeration circuit may be located at least partially outside of the freezer cabinet. For example, the compressor, the heat rejecting heat exchanger, the expansion valve and/or the reversing valve may be located outside of the freezer cabinet. The components of the refrigeration circuit located outside of the freezer cabinet may be located remote from the freezer cabinet, for example in a separate room such as a machinery room.

The refrigerated display system may comprise a plurality of freezer cabinets. For example, the refrigerated display system may comprise 2, 5 or 10 freezer cabinets. The plurality of freezer cabinets may each comprise an evaporator heat exchanger for cooling air within the freezer cabinet and a fan for drawing air across the evaporator heat exchanger. The evaporator heat exchanger of each freezer cabinet may form part of the refrigeration circuit of the refrigeration display system, with each freezer cabinet hence connected to a common refrigeration circuit. Hence, in another aspect, the present invention may provide a method of controlling a defrost process in a refrigerated display system comprising: a refrigeration circuit comprising one or more evaporator heat exchangers for cooling air within a freezer cabinet, and one or more freezer cabinets each comprising one of the one or more evaporator heat exchangers and an evaporator fan for drawing air across the evaporator heat exchanger, the method comprising: switching the refrigeration circuit from a cooling mode to a defrost mode to warm the air within the one or more freezer cabinets; and whilst in the defrost mode: measuring the temperature of the air at a first location within each of the one or more freezer cabinets remote from the evaporator heat exchanger; switching the evaporator fan on to draw air over the evaporator heat exchanger if the measured temperature of the air exceeds a first switching temperature; and switching the evaporator fan off if the temperature of the air falls below a second switching temperature lower than the first switching temperature.

The invention also extends to a corresponding refrigerated display system comprising a freezer cabinet according to appended claim 11, which may be a freezer cabinet for storing goods for access by consumers, such as a refrigerated display cabinet, for example. Accordingly, in a second aspect, the present invention provides a refrigerated display system including a freezer cabinet for storing goods in a temperature controlled environment, the system comprising: a refrigeration circuit comprising an evaporator heat exchanger in the freezer cabinet for cooling air within the freezer cabinet; a fan for drawing air across the evaporator heat exchanger and circulating air within the freezer cabinet; and a control system for controlling operation of the fan and the refrigeration circuit; wherein the control system is configured to, during a defrost process, switch the refrigeration circuit from a cooling mode to a defrost mode to warm air within the freezer cabinet, measure a temperature of the air at a first location within the freezer cabinet remote from the evaporator heat exchanger, and operate the fan to cause air to be drawn over the evaporator heat exchanger only if the measured temperature of the air exceeds a first switching temperature. Other parts of the refrigeration circuit may be within the freezer cabinet or external to it as discussed above.

The refrigerated display system of the second aspect may be configured to perform the above described method and may include one, or more, or all of the above described optional features. Thus, for example, the control system may be configured to operate in accordance with the features discussed above.

The control system may be configured to measure the temperature of the air at a second location within the freezer cabinet. The second location may be adjacent the evaporator heat exchanger and/or heater(s). The control system may be configured to end the defrost process if the temperature of the air measured at the second location is above a defrost termination temperature. For example, the control system may be configured to switch the refrigeration circuit from the defrost mode to the cooling mode when the temperature measured at the second location exceeds the defrost termination temperature. The defrost termination temperature may be between 2°C and 25°C. For example, the defrost termination temperature may be about 3°C, about 10°C, or about 15°C.

The control system may comprise one or more temperature sensors for measuring the temperature of the air at the first location and/or the second location. For example, the control system may comprise a first temperature sensor located at the first location for measuring the temperature of the air at the first location, and a second temperature sensor located at the second location for measuring the temperature of the air at the second location. The temperature sensor(s) may be the same as that discussed above in respect of the first aspect.

The control system may comprise an electrical circuit for powering the fan, the refrigeration circuit and/or the heater(s). Where the temperature sensor(s) comprise a thermal switch, the thermal switch may form part of the electrical circuit. For example, the electrical circuit may comprise a first thermal switch located at the first location. The first thermal switch may be configured to complete the electrical circuit and allow current to flow to the fan when the temperature at the first location exceeds the first switching temperature. The first thermal switch may be configured break the circuit to prevent current from flowing to the fan when the temperature at the first location falls below the second switching temperature. Hence, the first thermal switch may be configured to cause the evaporator fan to switch on and off dependant on the temperature of the air at the first location.

The electrical circuit may comprise a second thermal switch located at the second location. The second thermal switch may be configured to prevent heating of the air by the evaporator heat exchanger and/or the heater(s) when the temperature at the second location exceeds the defrost termination temperature. The second thermal switch may be configured to prevent flow of electrical current to the reversing valve, thereby taking the refrigeration circuit out of the heating mode, when the temperature of the air at the second location exceeds the defrost termination temperature. Optionally, the second thermal switch may be configured to prevent flow of electrical current to the heater(s) when the temperature of the air at the second location exceeds the defrost termination temperature. Hence, the second thermal switch may be configured to end the defrost process when the temperature of the air at the second location exceeds the defrost termination temperature.

Where the temperature sensor comprises an electrical temperature sensor, the control system may further comprise a digital controller arranged to receive data from the electrical temperature sensor. The digital controller may include a processor. The controller may be configured to turn the fan on if the data received from the first temperature sensor indicates that the temperature of the air at the first location is above the first switching temperature. The controller may be configured to turn the fan off if the data received from the first temperature sensor indicates that the temperature of the air at the first location is below the second switching temperature. Optionally, the controller may be configured to prevent heating of the air by the evaporator heat exchanger and/or the heater if the data received from the second temperature indicates that the temperature of the air at the second location is above the defrost termination temperature.

The location of the first temperature sensor can have an effect on the temperatures that are set as the first and second switching temperatures. For example, the temperature of the air in sheltered locations of the freezer cabinet may vary more slowly during a defrost process compared to the air in a more exposed location, and vice versa. Hence, if the first temperature sensor is located in a sheltered location the measured air temperature may vary more slowly than the temperature of the air in other regions of the freezer cabinet. Therefore, if the first temperature sensor is located at a sheltered location, the first and second switching temperatures may be set lower than if it were located in an exposed location. For example, if the first temperature sensor is located at a sheltered location, the first and second switching temperatures may be -1°C and -6°C respectively, whereas if the first temperature sensor is located at an exposed location, the first and second switching temperatures may be 10°C and 0°C respectively. Selecting the correct switching temperatures for the position of the first temperature sensor can prevent overheating of the freezer cabinet during a defrost process. This protects goods stored within the freezer cabinet, which could potentially become damaged if warmed exposed to too high a temperature.

Optionally, the freezer cabinet comprises a spoiler located at the first inlet for modifying the flow of air through the first inlet. The spoiler may have a length of between 20mm and 60 mm. For example, the spoiler may have a length of 30mm or 50mm. The spoiler may be positioned to cover or obscure all of, or a part of, the first inlet. The spoiler allows the flow of air through the first inlet to be manipulated and can lead to a more uniform flow of air through the inlet. This means that the temperature of the air at the first inlet is more uniform and is less likely to experience random fluctuations in temperature. Hence, the provision of a spoiler at the first inlet can lead to a more consistent and indicative measurement of the air temperature at the first location.

Certain preferred embodiments of the present invention will now be described, by way of example only, with reference to the following drawings, in which:
Figure 1 shows a cross section through a freezer cabinet;
Figure 2 is an enlarged view of a refrigeration system of the freezer cabinet of Figure 1;
Figure 3 is a perspective view of the freezer cabinet of Figure 1; and
Figure 4 is a graph showing fluctuations in the temperature of air within a freezer cabinet during an exemplary defrost process.

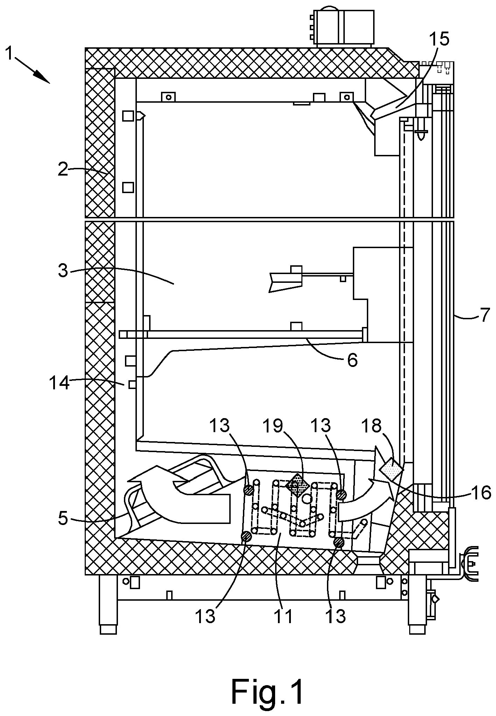

Figure 1 shows a cross section through a freezer cabinet 1. The freezer cabinet 1 comprises a housing 2 defining a storage compartment 3 for containing goods, for example perishable foodstuffs, in a temperature controlled environment, a refrigeration circuit 4 for controlling the temperature within the storage compartment 3 and an evaporator fan 5 for controlling the flow of air within the freezer cabinet 1.

The storage compartment 3 defines an enclosed volume that is thermally isolated from ambient conditions outside of the freezer cabinet 1 in order to ensure control and maintenance of temperature conditions within the storage compartment 3. For example, the housing 2 may be made of thermally insulating material to isolate the storage compartment 3 from the ambient conditions around the freezer cabinet 1. In the embodiment shown in Figure 1, the storage compartment 3 includes shelves 6 on which goods can be placed.

The housing 2 surrounds the storage compartment 3 and comprises at least one door 7 to enable access to the storage compartment 3. In this embodiment, the door 7 is arranged on a front side of the freezer cabinet 1, however it will be appreciated that it may be situated elsewhere. For example, the door 7 may be positioned on a top side of the freezer cabinet 1 to enable access to the storage compartment 3 from above.

The refrigeration circuit includes a compressor 8, a condenser 9, an expansion valve 10 and an evaporator 11. The refrigeration circuit 4 is arranged such that a refrigerant is able to flow through the compressor 8, the condenser 9, the expansion valve 10 and the evaporator 11 in a closed loop. In the present embodiment, the refrigeration circuit 4 also includes a reversing valve 12 to allow the flow of refrigerant through the circuit to be reversed. This allows the refrigeration circuit 4 to be switched between a cooling mode, in which the refrigeration circuit 4 cools air within the freezer cabinet 1 with compartment air being drawn over the evaporator 11 using the evaporator fan 5, and a heating mode, in which the refrigeration circuit 4 heats air within the refrigeration cabinet, and vice versa.

For example, in the cooling mode the refrigerant may flow through the refrigeration circuit 4 in a first direction, i.e. the refrigerant may pass through the compressor 8 and be compressed and superheated before being passed to the condenser 9 where it is cooled and condensed. The refrigerant may then be passed to the expansion valve 10 to decrease the pressure of the refrigerant and cause flash evaporation of the refrigerant before it is passed to the evaporator 11 where it is placed in a heat exchange relationship with the air within the freezer cabinet 1, causing cooling of the air and heating of the refrigerant. The refrigerant may then be passed back to the compressor 8 to complete the cycle. It should be noted that this arrangement with, the refrigerant circuit within the freezer cabinet, is simply an example for the type of refrigerated display system where the proposed defrost mode can be used. The defrost mode described herein can also give advantages for refrigerated display systems with differing arrangements used for providing cooling, for example the defrost mode can be used with a plugin-system, where the compressor and condenser are both inside the freezer cabinet; a remote system, where the compressor and condenser are positioned in a special machinery room outside of the freezer cabinet; and also a semi-plugin-system, which may include a brine-system connected with the condenser inside the freezer cabinet.

In the heating mode, the refrigerant is caused to flow through the refrigeration circuit 4 in the opposite direction, i.e. such that the compressed refrigerant from the compressor 8 is first passed through the evaporator 11, before being passed through the expansion valve 10, the condenser 9 and then back to the compressor 8. In this way, the superheated refrigerant flowing through the evaporator 11 causes heating of the air within the freezer cabinet 1. This reversal of refrigerant flow is enabled by the reversing valve 12. The heating mode may be used to defrost the freezer cabinet 1, when necessary.

The reversing valve 12 is configured to place the refrigeration circuit 4 to the heating mode in response to a flow of electrical current to the reversing valve 12. That is to say, when an electrical current is provided to the reversing valve 12, it operates to switch the refrigeration circuit 4 from the cooling mode to the heating mode by reversing the flow of refrigerant. When the electrical current is removed from the reversing valve 12, the refrigerant is returned to its original flow direction and the refrigeration cycle is switched back to the cooling mode.

Whist in this embodiment, the refrigeration circuit 4 can be operated in a heating mode to warm the air within the freezer cabinet 1, the freezer cabinet 1 may alternatively or additionally include an electric heater 13 for heating the air within the freezer cabinet 1. The electric heater 13 can be used as an alternative to, or in addition to, the evaporator 11 of the refrigeration circuit 4 (in the heating mode) to heat the air for defrosting the freezer cabinet 1. In embodiments with an electric heater 13, the electric heater 13 may be positioned adjacent the evaporator 11. There may be multiple electric heaters 13, such as the four heaters shown in Figure 1.

Other embodiments are also envisaged which do not include components for actively heating the air within the freezer cabinet 1. In all embodiments, the air within the freezer cabinet 1 will be warmed by the ambient conditions surrounding the freezer cabinet 1. Thermal energy from the relatively warm environment surrounding the cabinet will be conducted through the walls of the cabinet and cause the temperature of the air within the cabinet to rise. Hence, the temperature of the air will rise naturally during a defrost cycle when the evaporator 11 is no longer being used to cool the air. If the defrost process is continued for an appropriate length of time, the temperature of the air in the cabinet will increase until it is in thermal equilibrium with the ambient conditions outside of the cabinet. In some cases, this natural warming can warm the air sufficiently for use to melt ice in the cabinet during the defrost process. In such cases, no active heating of the air is required. However, it will be appreciated that the provision of a component for actively heating of the air, e.g. a refrigeration circuit 4 capable of heating the air and/or a heater 13, may allow the air to be heated more quickly and to a higher temperature compared to using natural heating alone.

As shown in Figure 1, the refrigeration circuit 4 and the fan 5 are situated outside of, and below, the enclosed volume of the storage compartment 3. Air passages are provided within the freezer cabinet 1 to allow air to circulate between the refrigeration circuit 4 and the storage compartment 3. In this way, cooled and/or heated air can be passed from the evaporator 11 to the storage compartment 3 via the air passages in order to modify the temperature within the storage compartment 3.

The air passages include a rear air channel 14 situated between the storage compartment 3 and a rear wall of the housing 2. The rear air channel 14 also extends above the storage compartment 3, between the storage compartment 3 and a top wall of the housing 2. An upper air vent 15 is provided in the storage compartment 3 to allow air to flow between the rear air channel 14 and the storage compartment 3. As can be seen in Figure 1, the upper air vent 15 allows air to be passed from the evaporator 11 to an upper portion of the storage compartment 3.

The air passages also include a return air vent 16 situated at the floor of the storage compartment 3, adjacent the door 7. The return air vent 16 allows air to be passed between the evaporator 11 and a lower portion of the storage compartment 3.

The fan 5 is provided to enable circulation of the air within the freezer cabinet 1. The fan 5 is arranged to, in use, draw air across the evaporator 11 to circulate the air from the evaporator 11 and into the storage compartment 3. Specifically, the fan 5 is arranged to draw air over the evaporator 11, and pass it through the rear air channel 14 and into the storage compartment 3 via the upper air vent 15.

As shown in Figure 1, the fan 5 is arranged rearward of the evaporator 11. That is to say, the fan 5 is positioned in an air flow path between the evaporator 11 and the rear air channel 14. When the fan 5 is switched on, it acts to draw air over the evaporator 11 and pushes the air through the rear air channel 14. However, when the fan 5 is switched off, it presents a blockage in the air flow path between the evaporator 11 and the rear air channel 14, thereby restricting flow of air from the evaporator 11 to the rear air channel 14.

In this way, any warm air emanating from the evaporator 11 (e.g. during a defrost cycle) is restricted from flowing into the rear air channel 14 by the fan 5, and instead flows, via natural convection, from the evaporator 11 and towards the return air vent 16. Some of this warmed air may pass into the storage compartment 3 through the return air vent 16. This natural flow of warm air can be reversed by switching on the fan 5 in order to push air through the rear air channel 14.

In order to monitor and control the temperature within the storage compartment 3, the freezer cabinet 1 also includes a control system 17, comprising a return air temperature sensor 18 and a defrost temperature sensor 19.

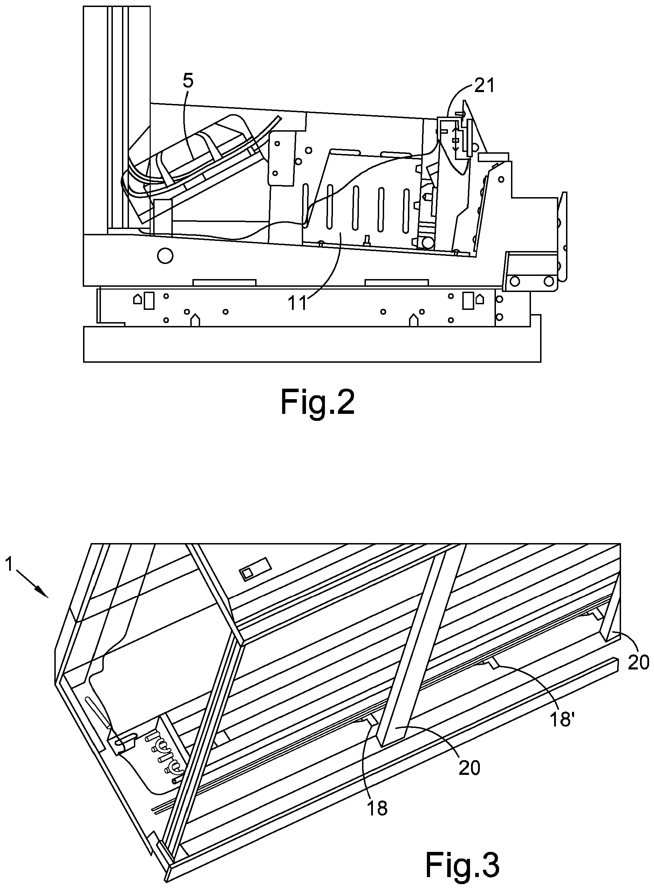

The return air temperature sensor 18 is positioned outside of the storage compartment 3 adjacent the return air vent 16 to enable control of the fan 5 in response to differing air temperatures at the return air vent 16. The return air temperature sensor 18 is situated such that it is within the flow path of air exiting and entering the storage compartment 3 via the air return vent, and can be positioned anywhere along the length of the return air vent 16. As shown in Figure 3, in this embodiment the return air temperature sensor 18 is positioned behind a mullion 20 of the door 7.

The defrost temperature sensor 19 is positioned to sense the temperature of the air surrounding the evaporator 11. The defrost temperature sensor 19 may be used, for example, to measure a rise in the temperature of the air surrounding the evaporator 11 during a defrost cycle. Hence, the defrost temperature sensor 19 may be positioned adjacent the evaporator 11 within the flow path of the air within the freezer cabinet 1.

The return air temperature sensor 18 and the defrost temperature sensor 19 can be used to control operation of the fan 5 and/or the refrigeration circuit 4. For instance, the fan 5 may operate differently, for example at different speeds, during a defrost cycle compared to a cooling cycle of the freezer cabinet 1. Hence, the temperature sensors 18, 19 can be used to determine when to switch the fan 5 and/or the refrigeration circuit 4 between a cooling mode of operation and a defrost mode of operation. For example, the fan 5 may be caused to switch from a defrost mode of operation to a cooling mode of operation when the temperature of the air measured by the defrost sensor reaches a certain value.

In the present embodiment, the return air temperature sensor 18 and the defrost sensor are bimetallic thermal switches. The control system 17 comprises an electrical circuit for providing electrical power to the fan 5 and the components of the refrigeration circuit 4. The thermal switches are arranged to provide direct mechanical control of the electrical circuit.

The thermal switches are configured to open and close when they reach certain temperatures, thereby enabling control of the supply of electricity to the fan 5 and the components of the refrigeration circuit 4.

The return air temperature sensor 18 is configured to allow current to flow through the electrical circuit to the fan 5 when it senses that the air temperature at the return air vent 16 is above a first switching temperature. The return air temperature sensor 18 is also configured to prevent current from flowing to the fan 5 when it senses that the air temperature at the return air vent 16 is below a second switching temperature. Hence, the return air temperature sensor 18 is configured to switch the fan 5 on and off dependant on the temperature of the air at the return air vent 16.

The defrost temperature sensor 19 is configured to allow current to flow to the reversing valve 12 when the air temperature at the evaporator 11 is below the defrost termination temperature. Therefore, during the defrost process, when the temperature of the air at the evaporator 11 is below the defrost termination temperature the refrigeration circuit 4 will operate in the heating mode, i.e. with the air being heated by the evaporator 11.

Also, the defrost temperature sensor 19 is configured such that current is prevented from flowing to the reversing valve 12 when the temperature of the air at the evaporator 11 is above the defrost termination temperature. Hence, when the air temperature at the evaporator 11 is above the defrost termination temperature, the refrigeration circuit 4 will operate in a cooling mode, i.e. with the air being cooled by the evaporator 11.

Whilst in the described embodiment the return air temperature sensor 18 and the defrost temperature sensor 19 are thermal switches, it will be appreciated that any suitable temperature sensors may be used. For example, the return air temperature sensor 18 and the defrost temperature sensor 19 may comprise thermistor sensors, semiconductor sensors and/or thermocouples for measuring the temperature of the air. In certain embodiments, the return air temperature sensor 18 and the defrost temperature sensor 19 may send electrical signals, indicative of a sensed temperature of the air, to a controller that controls the supply of electricity to the fan 5.

A spoiler 21 is located in the flow path of air flowing through the return air vent. This spoiler 21 is arranged to modify the flow of air through the return air vent and to provide a more uniform airflow. The spoiler 21 causes the temperature of the air flowing through the return air vent 16, and hence over the return air temperature sensor 18, to be more uniform. Thus, the temperature of the air flowing over, and sensed by, the return air temperature sensor 18 fluctuates less and is less prone to deviations caused by, for example, cold pockets of air from the storage compartment 3 flowing through the return air vent 16.

A method of defrosting the freezer cabinet 1 will now be described with reference to Figure 1.

A defrost process may be initiated automatically, for example if a certain time has lapsed since a previous defrost cycle was undertaken, or manually. During normal operation of the freezer cabinet 1, i.e. a cooling mode, the refrigeration circuit 4 is operated in a cooling mode to cool the air within the freezer cabinet 1. The fan 5 is switched on in order to draw air across the evaporator 11 and pass the cooled air through the rear air channel 14 and into the storage compartment 3 via the upper air vent 15.

Upon switching from a cooling mode to a defrost mode, the fan 5 is turned off. Optionally, the refrigeration circuit 4 is placed into a heating mode, or alternatively the refrigeration circuit 4 is turned off, e.g. by deactivation of the compressor. Optionally, electrical heaters 13 may be used during the defrost mode. In the heating mode, the refrigeration circuit 4 heats the air within the freezer cabinet 1. As discussed above, in the heating mode the flow of refrigerant through the refrigeration circuit 4 is reversed by the reversing valve 12 such that the refrigerant flowing through the evaporator 11 is hot, thereby heating the air within the freezer cabinet 1. In this way, the air within the freezer cabinet 1 surrounding the evaporator 11 is warmed. As a result, any ice that has built-up on or around the evaporator 11 will begin to melt.

During the defrost mode, as discussed above, due to the positioning of the evaporator 11, warmer air from the evaporator 11 naturally flows toward the return air vent 16 and into the storage compartment 3. The air may be warmed via the heaters 13 and/or via a heating mode of the refrigeration circuit. This warm air acts to melt any ice and frost at the return air vent 16.

When the evaporator fan 5 is turned off, the air only moves slowly over the evaporator 11 due to natural convection. This means that the air can be heated to a higher temperature and more quickly compared to if the fan 5 was running.

The warm air passing through the return air vent 16 causes any ice in the vicinity of the return air vent 16 to melt. However, the melting ice causes water vapour to become entrained in the warm air. Hence, the warm air entering the storage compartment 3 becomes moist. When the warm moist air interacts with the colder air within the storage compartment 3, it begins to cool. This may cause the water vapour within the air to condense and freeze. If this cooling continues, ice can build up around the return air vent 16 at the cabinet front near the door 7.

In order to prevent such a build-up of ice during the defrost mode, the evaporator fan 5 is switched on when a temperature sensed by the return air temperature sensor 18 reaches a predefined first switching temperature, and then is cycled on and off as explained below. Operating the evaporator fan 5 stops the flow of warm moist air into the storage compartment 3 via the return air vent 16 and causes the warm air to be pushed from the evaporator 11 into and through the rear air channel 14.

The air pushed by the evaporator fan 5 through the rear air channel 14 enters the storage compartment 3 via the upper air vent 15. In this way, the warm air is passed into the storage compartment 3 to melt ice that has built up in the storage compartment 3.

This flow of warm air into the storage compartment 3 from the rear air channel 14 also causes relatively cool air within the storage compartment 3 to move to the front and lower regions of the storage compartment 3, and through the return air vent 16. This cool air is subsequently heated as it passes over the evaporator 11. The warmed air is then pushed by the evaporator fan 5 into the storage compartment 3 via the rear air channel 14 and the upper air vent 15 to defrost ice.

The flow of cool air through the return air vent 16 also results in a reduction in the air temperature at the return air vent 16. This is sensed by the return air temperature sensor 18. In order to prevent ice from re-forming at the return air vent 16, the evaporator fan 5 is switched off when the temperature sensed by the return air temperature sensor 18 falls to a predefined second switching temperature, lower than the first switching temperature. In this way, the force causing the warmed air to be pushed from the evaporator 11 into and through the rear air channel 14 is removed and the warmed air reverts to its natural flow. That is, the warmed air once again starts to flow from the evaporator 11 towards and through the return air vent 16 into the storage compartment 3. Hence, the return air vent 16 is once again warmed by a flow of warm air.

The first and second switching temperatures are set to ensure that the air at the return air vent 16 is warm enough to melt ice at the return air vent 16. In addition, the switching temperatures ensure that once there is no more need to increase the heat of the air at the return air vent 16, i.e. since the air temperature is sufficient to melt the ice, the warmed air is used to melt ice in other regions of the freezer cabinet 1. Since the evaporator fan 5 is cycled on and off then this part of the defrosting of the freezer cabinet 1 is done by switching the evaporator fan 5 on to drive the warm air to other regions of the freezer cabinet 1.

The first and second sensing temperatures are set dependent on the location of the return air temperature sensor 18. In the present embodiment, as shown in Figure 3, the return air temperature sensor 18 is positioned behind a mullion 20 of the door 7. By positioning the return air temperature sensor 18 behind the door mullion 20, it is less susceptible to being damaged, for example during cleaning of the freezer cabinet 1.

Due to the proximity of the door mullion 20, air may not flow freely past the return air temperature sensor 18, and consequently the temperature of the air at the return air temperature sensor 18 may not deviate, e.g. due to heating by the evaporator 11, as much as in other regions of the freezer cabinet 1. That is to say, the temperature experienced by other parts of the return air vent 16, which are not sheltered by the door mullion 20, may be higher than those measured by the return air temperature sensor 18. Hence, in this embodiment, the first switching temperature is set at -1°C and the second switching temperature is set at -6°C.

In an alternative embodiment, also shown in Figure 3, the return air temperature sensor 18' is positioned between consecutive door mullions 20. Whilst this positioning provides less protection for the return air temperature sensor 18', it means that the air can more freely pass over the sensor. Hence, the temperature at the sensor is more indicative of the air temperature at other parts of the return air vent 16. In this embodiment the first switching temperature is set at 10°C and the second switching temperature is set at 0°C.

This cyclical process of switching the evaporator fan 5 on and off dependent on the temperature of the air sensed by the return air temperature sensor 18 is continued until the temperature of the air sensed by the defrost temperature sensor reaches a maximum defrost temperature. Once this maximum defrost temperature is reached, the defrost cycle is terminated. The maximum defrost temperature, also called the defrost termination temperature, is set to ensure that the temperature within the storage compartment 3 does not exceed a maximum allowable temperature. For example, the maximum defrost temperature may be 15°C. This ensures that the goods within the storage compartment 3 do not exceed an allowable temperate above which they may become damaged or degraded.

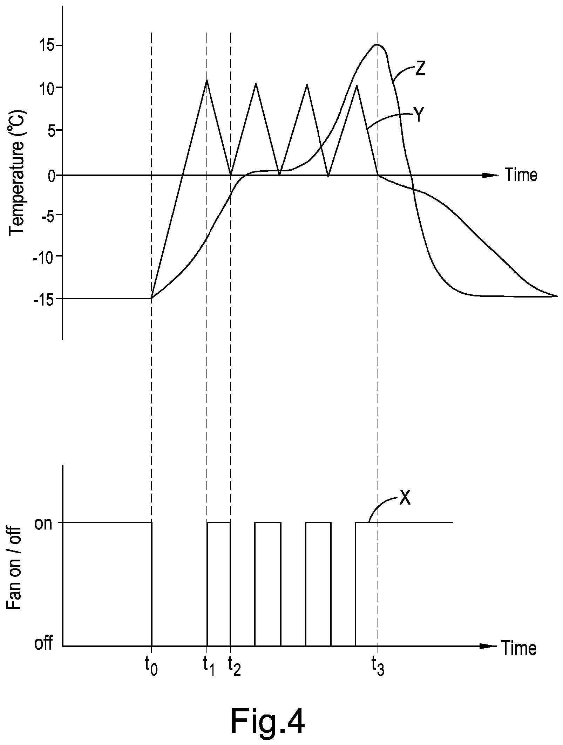

Figure 4 is a graph showing how the evaporator fan 5 is operated during an exemplary defrost process. Line X indicates when the fan 5 is switched on or off. Lines Y and Z show respectively how the temperature sensed by the return air temperature sensor 18 and the defrost temperature sensor varies during the defrost process.

At time t₀, a defrost process is initiated and the evaporator fan 5 is switched off. During the defrost process, the air within the freezer cabinet 1 is no longer being cooled and so the temperature of the air increases. This can be seen from lines Y and Z, which show a rise in the temperature sensed by both the return air temperature sensor 18 and the defrost temperature sensor after time t₀.

The temperature of the air at the return air vent 16 continues to rise until time t₁ when the temperature sensed by the return air temperature sensor 18 reaches the first switching temperature. In this embodiment, the first switching temperature is 10°C. In accordance with the invention, once the temperature sensed by the return air temperature sensor 18 exceeds the first switching temperature, the evaporator fan 5 is turned on. As can be seen from line X, the evaporator fan 5 is switched on from time t₁.

As discussed above, operation of the evaporator fan 5 causes cooler air from the storage compartment 3 to pass through the return air vent 16. This causes the temperature of the air sensed by the return air sensor to decrease, as shown by line Y. At time t₂, the temperature sensed by the return air temperature sensor 18 falls below the second switching temperature (in this embodiment 0°C). As a result, the evaporator fan 5 is switched off.

This process is continued until the temperature sensed by the defrost temperature sensor exceeds the defrost termination temperature. Since, during the defrost process, the air is not cooled by the refrigeration circuit 4, the temperature of the air sensed by the defrost temperature sensor increases from time t₁. The temperature sensed by the defrost temperature sensor increases until it reaches the defrost termination temperature at time t₃. In this embodiment, the defrost termination temperature is 15°C. At time t₃, the defrost process is ended. Accordingly, the refrigeration circuit 4 is switched back to the cooling mode in order to cool the air within the freezer cabinet 1. This is indicated by lines Y and Z, which show that the temperature of the air sensed by the return air sensor and the defrost temperature sensor begins to decrease after time t₃.

After ending the defrost process, there may be a delay before the temperature sensed by the return air temperature sensor 18 decreases significantly as a result of the travel time necessary for the cool air to move from the evaporator 11 (i.e. the cooling source) to the return air vent 16.

## Claims

1. A method of controlling a defrost process in a freezer cabinet (1) having an evaporator heat exchanger (11) for cooling air within the freezer cabinet (1) and an evaporator fan (5) for drawing air across the evaporator heat exchanger (11), wherein the evaporator heat exchanger (11) is a part of a refrigeration circuit (4) for cooling the freezer cabinet (1); the method comprising:
switching the refrigeration circuit (4) from a cooling mode to a defrost mode to warm the air within the freezer cabinet (1); and
whilst in the defrost mode, measuring the temperature of the air at a first location within the freezer cabinet (1) remote from the evaporator heat exchanger (11);
the method **characterised by**, whilst in the defrost mode:
switching the evaporator fan (5) on to draw air over the evaporator heat exchanger (11) if the measured temperature of the air exceeds a first switching temperature; and
switching the evaporator fan (5) off if the measured temperature of the air falls below a second switching temperature lower than the first switching temperature.

2. A method according to claim 1, comprising:
measuring the temperature of the air at a second location within the freezer cabinet (1); and
switching the refrigeration circuit (4) from the defrost mode to the cooling mode when the temperature of the air measured at the second location exceeds a defrost termination temperature.

3. A method according to claim 2, wherein the defrost termination temperature is between 2°C and 25°C.

4. A method according to any preceding claim, wherein the refrigeration circuit (4) comprises a compressor (8) for compressing a refrigerant, and wherein switching the refrigeration circuit (4) from the cooling mode to the defrost mode comprises switching off the compressor (8).

5. A method according to any preceding claim, wherein the air is at least partially warmed by the environment surrounding the freezer cabinet (1) during the defrost mode.

6. A method according to and preceding claim, comprising operating the refrigeration circuit (4) in a heating mode to heat the air within the freezer cabinet (1) during the defrost mode.

7. A method according to claim 6, wherein the evaporator heat exchanger (11) is used to heat the air within the freezer cabinet (1) during the heating mode of the refrigeration circuit (4); and wherein the evaporator fan (5) is for creating circulation of air through the storage compartment (3) as well as over the evaporator heat exchanger (11).

8. A method according to claim 6 or 7, wherein the refrigeration circuit (4) comprises a reversing valve (12) for reversing a flow of refrigerant in the refrigeration circuit (4), and operating the refrigeration circuit (4) in a heating mode comprises using the reversing valve (12) to reverse the flow of refrigerant in the refrigeration circuit (4).

9. A method according to any preceding claim, wherein the freezer cabinet (1) comprises a heater (13), and wherein the heater (13) is used to warm the air within the freezer cabinet (1) during the defrost mode.

10. A method according to any preceding claim, wherein the first switching temperature is between -5°C and 11°C, and/or wherein the second switching temperature is between -10°C and 5°C.

11. A refrigerated display system including a freezer cabinet (1) for storing goods in a temperature controlled environment, the refrigerated display system comprising:
a refrigeration circuit (4) comprising an evaporator heat exchanger (11) in the freezer cabinet (1) for cooling air within the freezer cabinet (1);
an evaporator fan (5) for drawing air across the evaporator heat exchanger (11) and circulating air within the freezer cabinet (1); and
a control system (17) for controlling operation of the fan (5) and the refrigeration system;
wherein the control system (17) is configured to, during a defrost process, switch the refrigeration system from a cooling mode to a defrost mode to warm air within the freezer cabinet (1), and measure a temperature of the air at a first location within the freezer cabinet (1) remote from the evaporator heat exchanger (11),
**characterised in that** the control system (17) is configured to, during the defrost process, switch the evaporator fan (5) on to draw air over the evaporator heat exchanger (11) if the measured temperature of the air exceeds a first switching temperature, and switch the evaporator fan (5) off if the temperature of the air falls below a second switching temperature lower than the first switching temperature.

12. A refrigerated display system according to claim 11, wherein the freezer cabinet comprises a storage compartment (3) defining an enclosed volume for containing goods, optionally wherein the refrigeration system is external to the enclosed volume.

13. A refrigerated display system according to claim 12, wherein the storage compartment (3) has a first inlet (16) for allowing air to flow into and out from a lower portion of the storage compartment (3) and/or a second inlet (15) for allowing air to flow into and out from an upper portion of the storage compartment (3); and wherein the evaporator fan (5) is for creating circulation of air through the storage compartment (3) as well as over the evaporator heat exchanger (11).

14. A refrigerated display system according to claim 13, the freezer cabinet (1) comprising a spoiler (21) positioned at the first inlet (16) to control a flow of air through the first inlet (16).

15. A refrigerated display system according to any of claims 11 to 14 configured to perform the method of any of claims 1 to 10.

## Patentansprüche

1. Verfahren zum Steuern eines Abtauprozesses in einem Gefrierschrank (1), der einen Verdampferwärmetauscher (11) zum Kühlen von Luft innerhalb des Gefrierschranks (1) und ein Verdampfergebläse (5) zum Ansaugen von Luft über den Verdampferwärmetauscher (11) aufweist, wobei der Verdampferwärmetauscher (11) Teil eines Kältekreislaufs (4) zum Kühlen des Gefrierschranks (1) ist; wobei das Verfahren Folgendes umfasst:
Umschalten des Kältekreislaufs (4) von einem Kühlmodus in einen Abtaumodus, um die Luft in dem Gefrierschrank (1) zu erwärmen; und
während des Abtaumodus, Messen der Temperatur der Luft an einer ersten Stelle innerhalb des Gefrierschranks (1), entfernt von dem Verdampferwärmetauscher (11);
wobei das Verfahren **dadurch gekennzeichnet ist, dass** während des Abtaumodus:
das Verdampfergebläse (5) eingeschaltet wird, um Luft über den Verdampferwärmetauscher (11) zu saugen, falls die gemessene Temperatur der Luft eine erste Schalttemperatur überschreitet; und
das Verdampfergebläse (5) abgeschaltet wird, falls die gemessene Temperatur der Luft unter eine zweite Schalttemperatur, die niedriger als die erste Schalttemperatur ist, fällt.

2. Verfahren nach Anspruch 1, ferner umfassend:
Messen der Lufttemperatur an einer zweiten Stelle innerhalb des Gefrierschranks (1); und
Umschalten des Kältekreislaufs (4) von dem Abtaumodus in den Kühlmodus, wenn die Temperatur der Luft, die an der zweiten Stelle gemessen wird, eine Abtau-Endtemperatur überschreitet.

3. Verfahren nach Anspruch 2, wobei die Abtau-Endtemperatur zwischen 2 °C und 25 °C liegt.

4. Verfahren nach einem vorstehenden Anspruch, wobei der Kältekreislauf (4) einen Kompressor (8) zum Komprimieren eines Kältemittels umfasst und wobei das Umschalten des Kältekreislaufs (4) von dem Kühlmodus in den Abtaumodus das Abschalten des Kompressors (8) umfasst.

5. Verfahren nach einem vorstehenden Anspruch, wobei die Luft während des Abtaumodus mindestens teilweise von der Umgebung, die den Gefrierschrank (1) umgibt, erwärmt wird.

6. Verfahren nach einem vorstehenden Anspruch, das das Betreiben des Kältekreislaufs (4) in einem Heizmodus umfasst, um die Luft in dem Gefrierschrank (1) während des Abtaumodus zu erwärmen.

7. Verfahren nach Anspruch 6, wobei der Verdampferwärmetauscher (11) zum Erwärmen der Luft in dem Gefrierschrank (1) während des Heizmodus des Kältekreislaufs (4) verwendet wird; und wobei das Verdampfergebläse (5) dazu dient, Luftzirkulation durch das Lagerfach (3) sowie über den Verdampferwärmetauscher (11) zu schaffen.

8. Verfahren nach Anspruch 6 oder 7, wobei der Kältekreislauf (4) ein Umkehrventil (12) zum Umkehren eines Kältemittelstroms in dem Kältekreislauf (4) umfasst und das Betreiben des Kältekreislaufs (4) in einem Heizbetrieb das Verwenden des Umkehrventils (12) umfasst, um den Kältemittelfluss in dem Kältekreislauf (4) umzukehren.

9. Verfahren nach einem vorstehenden Anspruch, wobei der Gefrierschrank (1) eine Heizung (13) umfasst und wobei die Heizung (13) zum Erwärmen der Luft in dem Gefrierschrank (1) während des Abtaumodus verwendet wird.

10. Verfahren nach einem vorstehenden Anspruch, wobei die erste Schalttemperatur zwischen -5 °C und 11 °C liegt und/oder wobei die zweite Schalttemperatur zwischen -10 °C und 5 °C liegt.

11. Gekühltes Präsentationssystem, das einen Gefrierschrank (1) zum Lagern von Waren in einer temperaturkontrollierten Umgebung beinhaltet, wobei das gekühlte Präsentationssystem Folgendes umfasst:
einen Kältekreislauf (4), der einen Verdampferwärmetauscher (11) in dem Gefrierschrank (1) zum Kühlen der Luft in dem Gefrierschrank (1) umfasst;
ein Verdampfergebläse (5), um Luft über den Verdampferwärmetauscher (11) zu saugen und Luft in dem Gefrierschrank (1) zu zirkulieren; und
ein Steuersystem (17) zum Steuern des Betriebs des Gebläses (5) und des Kältesystems;
wobei das Steuersystem (17) dazu konfiguriert ist, während eines Abtauprozesses das Kältesystem von einem Kühlmodus in einen Abtaumodus umzuschalten, um Luft innerhalb des Gefrierschranks (1) zu erwärmen und eine Temperatur der Luft an einer ersten Stelle innerhalb des Gefrierschranks (1), entfernt von dem Verdampferwärmetauscher (11), zu messen,
**dadurch gekennzeichnet, dass** das Steuersystem (17) dazu konfiguriert ist, während des Abtauprozesses das Verdampfergebläse (5) einzuschalten, um Luft über den Verdampferwärmetauscher (11) zu saugen, falls die gemessene Temperatur der Luft eine erste Schalttemperatur überschreitet, und das Verdampfergebläse (5) abzuschalten, falls die Temperatur der Luft unter eine zweite Schalttemperatur, die niedriger als die erste Schalttemperatur ist, fällt.

12. Gekühltes Präsentationsystem nach Anspruch 11, wobei der Gefrierschrank ein Lagerfach (3) umfasst, das einen geschlossenen Raum zum Aufnehmen von Waren definiert, wobei das Kältesystem wahlweise außerhalb des geschlossenen Raums liegt.

13. Gekühltes Präsentationsystem nach Anspruch 12, wobei das Lagerfach (3) einen ersten Einlass (16) aufweist, um es Luft zu gestatten, in einen unteren Abschnitt des Lagerfachs (3) hinein und daraus heraus zu strömen, und/oder einen zweiten Einlass (15), um es Luft zu gestatten, in einen oberen Abschnitt des Lagerfachs (3) hinein und daraus heraus zu strömen; und wobei das Verdampfergebläse (5) dazu dient, eine Luftzirkulation durch das Lagerfach (3) sowie über den Verdampferwärmetauscher (11) zu schaffen.

14. Gekühltes Präsentationssystem nach Anspruch 13, wobei der Gefrierschrank (1) einen Spoiler (21) umfasst, der an dem ersten Einlass (16) positioniert ist, um einen Luftstrom durch den ersten Einlass (16) zu steuern.

15. Gekühltes Präsentationssystem nach einem der Ansprüche 11 bis 14, das dazu konfiguriert ist, das Verfahren nach einem der Ansprüche 1 bis 10 durchzuführen.

## Revendications

1. Procédé de commande d'un processus de dégivrage dans une armoire de congélateur (1) ayant un échangeur de chaleur d'évaporateur (11) pour refroidir l'air à l'intérieur de l'armoire de congélateur (1) et un ventilateur d'évaporateur (5) pour aspirer l'air à travers l'échangeur de chaleur d'évaporateur (11), dans lequel l'échangeur de chaleur d'évaporateur (11) fait partie d'un circuit de réfrigération (4) pour refroidir l'armoire de congélateur (1) ; le procédé comprenant :
la commutation du circuit de réfrigération (4) d'un mode de refroidissement à un mode de dégivrage pour réchauffer l'air à l'intérieur de l'armoire de congélateur (1) ; et
pendant le mode de dégivrage, la mesure de la température de l'air à un premier emplacement à l'intérieur de l'armoire de congélateur (1) à distance de l'échangeur de chaleur d'évaporateur (11) ;
le procédé étant **caractérisé par**, pendant le mode dégivrage :
la mise en marche du ventilateur d'évaporateur (5) pour aspirer de l'air sur l'échangeur de chaleur d'évaporateur (11) si la température mesurée de l'air dépasse une première température de commutation ; et
la mise hors tension du ventilateur d'évaporateur (5) si la température mesurée de l'air tombe en dessous d'une seconde température de commutation inférieure à la première température de commutation.

2. Procédé selon la revendication 1, comprenant :
la mesure de la température de l'air au niveau d'un second emplacement à l'intérieur de l'armoire de congélateur (1) ; et
la commutation du circuit de réfrigération (4) du mode de dégivrage au mode de refroidissement lorsque la température de l'air mesurée au niveau du second emplacement dépasse une température de fin de dégivrage.

3. Procédé selon la revendication 2, dans lequel la température de fin de dégivrage est comprise entre 2 °C et 25 °C.

4. Procédé selon une quelconque revendication précédente, dans lequel le circuit de réfrigération (4) comprend un compresseur (8) pour comprimer un réfrigérant, et dans lequel la commutation du circuit de réfrigération (4) du mode de refroidissement au mode de dégivrage comprend la mise hors tension du compresseur (8).

5. Procédé selon une quelconque revendication précédente, dans lequel l'air est au moins partiellement réchauffé par l'environnement entourant l'armoire de congélateur (1) pendant le mode de dégivrage.

6. Procédé selon une quelconque revendication précédente, comprenant le fonctionnement du circuit de réfrigération (4) dans un mode de chauffage pour chauffer l'air à l'intérieur de l'armoire de congélateur (1) pendant le mode de dégivrage.

7. Procédé selon la revendication 6, dans lequel l'échangeur de chaleur d'évaporateur (11) est utilisé pour chauffer l'air à l'intérieur de l'armoire de congélateur (1) pendant le mode de chauffage du circuit de réfrigération (4) ; et dans lequel le ventilateur d'évaporateur (5) est destiné à créer une circulation d'air à travers le compartiment de stockage (3) ainsi que sur l'échangeur de chaleur d'évaporateur (11).

8. Procédé selon la revendication 6 ou 7, dans lequel le circuit de réfrigération (4) comprend une vanne d'inversion (12) pour inverser un écoulement de réfrigérant dans le circuit de réfrigération (4), et le fonctionnement du circuit de réfrigération (4) dans un mode de chauffage comprend l'utilisation de la vanne d'inversion (12) pour inverser l'écoulement de réfrigérant dans le circuit de réfrigération (4).

9. Procédé selon une quelconque revendication précédente, dans lequel l'armoire de congélateur (1) comprend un élément chauffant (13), et dans lequel l'élément chauffant (13) est utilisé pour réchauffer l'air à l'intérieur de l'armoire de congélateur (1) pendant le mode de dégivrage.

10. Procédé selon une quelconque revendication précédente, dans lequel la première température de commutation est comprise entre -5 °C et 11 °C, et/ou dans lequel la seconde température de commutation est comprise entre -10 °C et 5 °C.

11. Système de présentation réfrigéré comportant une armoire de congélation (1) pour stocker des marchandises dans un environnement à température régulée, le système de présentation réfrigéré comprenant :
un circuit de réfrigération (4) comprenant un échangeur de chaleur d'évaporateur (11) dans l'armoire de congélateur (1) pour refroidir l'air à l'intérieur de l'armoire de congélateur (1) ;
un ventilateur d'évaporateur (5) pour aspirer de l'air à travers l'échangeur de chaleur d'évaporateur (11) et faire circuler l'air à l'intérieur de l'armoire de congélateur (1) ; et
un système de commande (17) pour commander le fonctionnement du ventilateur (5) et du système de réfrigération ;
dans lequel le système de commande (17) est configuré pour, pendant un processus de dégivrage, commuter le système de réfrigération d'un mode de refroidissement à un mode de dégivrage pour réchauffer l'air à l'intérieur de l'armoire de congélateur (1), et mesurer une température de l'air au niveau d'un premier emplacement à l'intérieur de l'armoire de congélateur (1) à distance de l'échangeur de chaleur d'évaporateur (11),
**caractérisé en ce que** le système de commande (17) est configuré pour, pendant le processus de dégivrage, mettre en marche le ventilateur d'évaporateur (5) pour aspirer de l'air sur l'échangeur de chaleur d'évaporateur (11) si la température mesurée de l'air dépasse une première température de commutation, et mettre hors tension le ventilateur d'évaporateur (5) si la température de l'air tombe en dessous d'une seconde température de commutation inférieure à la première température de commutation.

12. Système de présentation réfrigéré selon la revendication 11, dans lequel l'armoire de congélateur comprend un compartiment de stockage (3) définissant un volume fermé pour contenir des marchandises, éventuellement dans lequel le système de réfrigération est externe au volume enfermé.

13. Système de présentation réfrigéré selon la revendication 12, dans lequel le compartiment de stockage (3) a une première entrée (16) pour permettre à l'air de s'écouler dans et hors d'une partie inférieure du compartiment de stockage (3) et/ou une seconde entrée (15) pour permettre à l'air de s'écouler dans et hors d'une partie supérieure du compartiment de stockage (3) ; et dans lequel le ventilateur d'évaporateur (5) est destiné à créer une circulation d'air à travers le compartiment de stockage (3) ainsi que sur l'échangeur de chaleur d'évaporateur (11).

14. Système de présentation réfrigéré selon la revendication 13, l'armoire de congélateur (1) comprenant un aileron (21) positionné au niveau de la première entrée (16) pour commander un écoulement d'air à travers la première entrée (16).

15. Système de présentation réfrigéré selon l'une quelconque des revendications 11 à 14 configuré pour exécuter le procédé selon l'une quelconque des revendications 1 à 10.
